(19)

Europäisches
Patentamt
European
Patent Office
Office européen
des brevets

(11) **EP 4 286 892 A1**

(12) **EUROPEAN PATENT APPLICATION**
published in accordance with Art. 153(4) EPC

(43) Date of publication:
**06.12.2023   Bulletin 2023/49**

(21) Application number: **21927631.8**

(22) Date of filing: **19.11.2021**

(51) International Patent Classification (IPC):
***G01S 17/04*** (2020.01)      ***G01S 7/38*** (2006.01)

(52) Cooperative Patent Classification (CPC):
**G01S 7/38; G01S 17/04; G01S 17/931; G01V 8/10**

(86) International application number:
**PCT/CN2021/131860**

(87) International publication number:
**WO 2022/179207 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **26.02.2021   CN 202110217667**

(71) Applicant: **Huawei Technologies Co., Ltd.
Shenzhen, Guangdong 518129 (CN)**

(72) Inventors:
- **HU, Xuan
  Shenzhen, Guangdong 518129 (CN)**
- **LI, Shuaiyang
  Shenzhen, Guangdong 518129 (CN)**
- **SHI, Xianling
  Shenzhen, Guangdong 518129 (CN)**
- **HUANG, Zhizhen
  Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54)   **WINDOW OCCLUSION DETECTION METHOD AND APPARATUS**

(57)   A window smear detection method and apparatus, a computer-readable medium, a chip, and a terminal are provided, relate to the technical field of sensors, and can be used in assisted driving and automated driving. The method includes: obtaining a first window echo strength and a second window echo strength, where the first window echo strength represents a reference window echo strength, and the second window echo strength represents a window echo strength at a current moment (S601); obtaining a detection parameter at a first moment and a detection parameter at a second moment that are of a target point, where the detection parameter includes a reflectivity and/or a position coordinate of the target point (S602); and obtaining a window smear parameter based on the first window echo strength, the second window echo strength, the detection parameter at the first moment, and the detection parameter at the second moment, where the window smear parameter is used to indicate a window smear status (S603). The method improves accuracy of light detection and ranging window smear detection, and therefore improves a capability of an advanced driving assistance system ADAS of a terminal in automated driving or assisted driving.

S601  Obtain a first window echo strength and a second window echo strength

S602  Obtain a detection parameter at a first moment and a detection parameter at a second moment that are of a target point

S603  Obtain a window smear parameter based on the first window echo strength, the second window echo strength, the detection parameter at the first moment, and the detection parameter at the second moment

FIG. 6

Processed by Luminess, 75001 PARIS (FR)

## Description

This application claims priority to Chinese Patent Application No. 202110217667.7, filed with the China National Intellectual Property Administration on February 26, 2021 and entitled "WINDOW SMEAR DETECTION METHOD AND APPARATUS", which is incorporated herein by reference in its entirety.

## TECHNICAL FIELD

Embodiments of this application relate to the field of light detection and ranging, and in particular, to a window smear detection method and apparatus.

## BACKGROUND

An advanced driving assistance system (advanced driving assistance system, ADAS) needs to use a plurality of types of sensors to sense a surrounding environment. Light detection and ranging (light detection and ranging, LiDAR) can quickly and accurately obtain information about the surrounding environment, and therefore, the LiDAR is one of the commonly used sensors in the ADAS. A LiDAR system is used for distance measurement. The LiDAR emits laser light to a measurement target, and then a detector receives an echo signal from the target. A distance to the target can be determined by measuring a round-trip time of a transmitted signal. The LiDAR system extends a distance measurement result of a single point to be two-dimensional by scanning or multi-element array measurement to form a depth image.

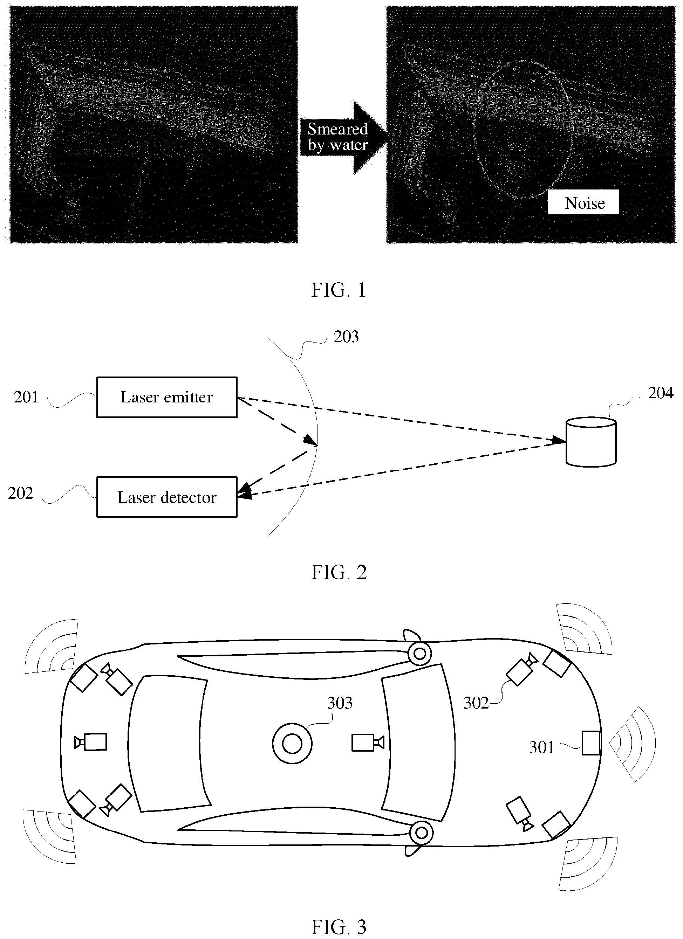

The LiDAR is usually mounted on a vehicle, and internal components are protected by a window. When there is a smear on a LiDAR window and the emitted laser light goes through the smear, reflection, absorption, or even refraction occurs, and distance measurement performance of the LiDAR is affected. As shown in FIG. 1, FIG. 1 is a schematic diagram of imaging after a LiDAR window is smeared by water drops. When there are water drops on the LiDAR window, noise is generated in LiDAR imaging. Therefore, it is important to ensure that the LiDAR window is clean for the advanced driver assistance system.

At present, a LiDAR window smear is mainly detected by man or detected by an additional detection component, causing an increase in use and design costs of a LiDAR. Therefore, how to detect a LiDAR window smear without increasing use and design costs of a LiDAR is an urgent problem to be resolved.

## SUMMARY

This application provides a window smear detection method and apparatus. This application improves precision of light detection and ranging window smear detection, and improves accuracy of smear alarming and categorization.

According to a first aspect, a window smear detection method is provided. The method includes: obtaining a first window echo strength and a second window echo strength, where the first window echo strength represents a reference window echo strength, and the second window echo strength represents a window echo strength at a current moment; obtaining a detection parameter at a first moment and a detection parameter at a second moment that are of a target point, where the detection parameter includes a reflectivity and/or a position coordinate of the target point; and obtaining a window smear parameter based on the first window echo strength, the second window echo strength, the detection parameter at the first moment, and the detection parameter at the second moment, where the window smear parameter is used to indicate a window smear status.

In the technical solution according to this embodiment of this application, the window smear parameter is preliminarily determined based on the second window echo strength and the reference window echo strength that are acquired in real time. On this basis, the window smear parameter is accurately obtained based on the detection parameter at the first moment and the detection parameter at the second moment, to accurately detect a smear on a light detection and ranging front-facing window, thereby improving accuracy of smear alarming and categorization.

With reference to the first aspect, in some implementations of the first aspect, the obtaining a window smear parameter includes: obtaining the window smear parameter based on a first change parameter and a second change parameter. The first change parameter includes a difference between the second window echo strength and the first window echo strength, or a ratio of the second window echo strength to the first window echo strength; and the second change parameter indicates a change between a reflectivity at the first moment and a reflectivity at the second moment that are of the target point, or a change between an actual value of a position coordinate of the target point at the first moment and an estimated value of the position coordinate at the first moment. The estimated value of the position coordinate at the first moment is obtained based on a position coordinate at the second moment.

In the technical solution according to this embodiment of this application, compared with determining whether there is a smear on the LiDAR window based on a window echo strength, determining whether there is a smear on the LiDAR window based on the first change parameter is advantageous in that a window echo strength change parameter can more clearly reflect, by showing a multiple relationship or a difference relationship, a difference between window echo strengths before and after the window is smeared, and is not affected by a magnitude of an echo strength of a window that is not smeared.

With reference to the first aspect, in some implementations of the first aspect, the method further includes: outputting at least one of alarm information, the first change parameter, or the window smear parameter, where the alarm information is used to prompt the window smear status, and the first change parameter corresponds to smear categorization and/or smear area division.

With reference to the first aspect, in some implementations of the first aspect, the method includes: A fifth change parameter includes a first element and a second element, where the first element corresponds to $p$ elements in the first change parameter that are greater than a first threshold, and $p$ is a positive integer; and the second element corresponds to $q$ elements in the first change parameter that are less than or equal to the first threshold, a value of the second element is 0, and $q$ is a positive integer. The obtaining a window smear parameter includes: determining the window smear parameter based on a weighted sum of a value of at least one fourth change parameter, where the fourth change parameter includes the second element, a third element, and a fourth element; and verifying the first element based on the second change parameter to obtain the third element and the fourth element, where the third element represents $n$ times values of $r$ elements in the first element, the $r$ elements represent an element that is in the second change parameter corresponding to the $r$ elements and that is less than or equal to a second threshold, or the $r$ elements represent an element that is in the second change parameter corresponding to the $r$ elements and that is less than or equal to a third threshold, $r$ is a positive integer, and $n$ is a positive real number less than 1 or is 0. The fourth element represents $S$ elements in the first element, the $S$ elements represent an element that is in the second change parameter corresponding to the $S$ elements and that is greater than the second threshold, or the $S$ elements represent an element that is in the second change parameter corresponding to the $S$ elements and that is greater than the third threshold, and $S$ is a positive integer.

In the technical solution according to this embodiment of this application, the window smear parameter $Z$ obtained by modifying the first change parameter based on the second change parameter provides more accurate window smear information, and eliminates impact of other factors, such as a temperature and power fluctuation of a laser emitter, that cause an excessively high window echo strength, thereby improving accuracy of window smear detection. In addition, a window smear alarm based on the window smear parameter $Z$ can be more accurate, and a smear categorization result based on the modified first change parameter can be more accurate.

With reference to the first aspect, in some implementations of the first aspect, the method further includes: determining, based on the window smear parameter and a weight of a smear in each of different window areas, whether to output the alarm information.

With reference to the first aspect, in some implementations of the first aspect, the method further includes: determining the weight of the smear in each of the different window areas based on a position of each of the different window areas relative to a moving direction of a mobile device.

With reference to the first aspect, in some implementations of the first aspect, the method further includes: determining an alarm coefficient; and the determining whether to output the alarm information includes: outputting the alarm information if the window smear alarm coefficient is greater than a smear alarm threshold; or skipping outputting the alarm information if the window smear alarm coefficient is less than or equal to the smear alarm threshold, where the smear alarm threshold is determined based on an application scenario.

In the technical solution according to this embodiment of this application, the window smear alarm coefficient is determined based on a degree of impact of a position of a window smear point on LiDAR performance and a degree of smearing of each smear point. The window smear alarm coefficient can more accurately reflect the degree of smearing of the smear on the LiDAR window, and can reflect the degree of impact, on the LiDAR performance, of the position of the smear on the LiDAR window. Compared with a manner of making an alarm-related decision based on a smear size, this method increases an alarm probability when a small part is severely smeared and an important angle of view is smeared, and reduces an alarm probability when a large part is smeared but there is a slight degree of smearing. The smear alarm threshold varies with a LiDAR application scenario in real time, to well satisfy requirements of using a LiDAR in different scenarios.

With reference to the first aspect, in some implementations of the first aspect, the method further includes: determining a type of a smear on a light detection and ranging front-facing window based on a first change parameter distribution vector and a window smear template, or determining the type of the smear on the light detection and ranging front-facing window based on a fourth change parameter distribution vector and the window smear template, where the type of the smear on the light detection and ranging front-facing window includes a category of the smear and a degree of smearing of the smear.

With reference to the first aspect, in some implementations of the first aspect, the method further includes: The window smear template is determined based on the third change parameter, a window transmissivity, and a flow speed of a smear of each of different degrees of smearing in each of different types of smears, where the window transmissivity represents the degree of smearing of the type of the window smear.

With reference to the first aspect, in some implementations of the first aspect, the determining a type of a smear on a light detection and ranging window includes: determining the type of the window smear based on a matching score $score_I$, where the matching score $score_I$ is determined based on the first change parameter distribution vector and the window smear template or determined based on the fourth change parameter distribution vector and the window smear template; or determining the type of the window smear based on the matching score $score_I$ and a matching score $score_{II}$, where the matching score $score_{II}$ is determined based on a flow speed of the smear obtained based on the first change parameter and a flow speed of the smear in the window smear template or determined based on a flow speed of the smear obtained based on the fourth change parameter and a flow speed of the smear in the window smear template.

In the technical solution according to this embodiment of this application, a type of a smear obtained by window smear template matching and smear flow speed matching is more accurate. In addition, a degree of smearing of the smear can be further obtained. The degree of smearing of the smear is represented by a transmissivity corresponding to a matched window smear template. The accurate category and degree of smearing of the smear enable a LiDAR or an MDC to determine a suitable cleaning manner. For example, if the smear is fog, the smear may be cleaned by heating the front-facing window.

According to a second aspect, a window smear detection apparatus is provided. The apparatus includes an obtaining unit and a first processing unit. The obtaining unit is configured to obtain a first window echo strength and a second window echo strength, where the first window echo strength represents a reference window echo strength, and the second window echo strength represents a window echo strength at a current moment. The obtaining unit obtains a detection parameter at a first moment and a detection parameter at a second moment that are of a target point, where the detection parameter includes a reflectivity and/or a position coordinate of the target point. The first processing unit obtains a window smear parameter based on the first window echo strength, the second window echo strength, the detection parameter at the first moment, and the detection parameter at the second moment, where the window smear parameter is used to indicate a window smear status.

In the technical solution according to this embodiment of this application, the window smear parameter is preliminarily determined based on the second window echo strength and the reference window echo strength that are acquired in real time. On this basis, the window smear parameter is accurately obtained based on the detection parameter at the first moment and the detection parameter at the second moment, to accurately detect a smear on a light detection and ranging front-facing window, thereby improving accuracy of smear alarming and categorization.

With reference to the second aspect, in some implementations of the second aspect, the obtaining a window smear parameter includes: The first processing unit is further configured to obtain the window smear parameter based on a first change parameter and a second change parameter. The first change parameter includes a difference between the second window echo strength and the first window echo strength, or a ratio of the second window echo strength to the first window echo strength; and the second change parameter indicates a change between a reflectivity at the first moment and a reflectivity at the second moment that are of the target point, or a change between an actual value of a position coordinate of the target point at the first moment and an estimated value of the position coordinate at the first moment. The estimated value of the position coordinate at the first moment is obtained based on a position coordinate at the second moment.

In the technical solution according to this embodiment of this application, compared with determining whether there is a smear on the LiDAR window based on a window echo strength, determining whether there is a smear on the LiDAR window based on the first change parameter is advantageous in that a window echo strength change parameter can more clearly reflect, by showing a multiple relationship or a difference relationship, a difference between window echo strengths before and after the window is smeared, and is not affected by a magnitude of an echo strength of a window that is not smeared.

With reference to the second aspect, in some implementations of the second aspect, the apparatus further includes an output unit. The output unit is configured to output at least one of alarm information, the first change parameter, or the window smear parameter, where the alarm information is used to prompt the window smear status, and the first change parameter corresponds to smear categorization and/or smear area division.

With reference to the second aspect, in some implementations of the second aspect, the apparatus is further configured for: A fifth change parameter includes a first element and a second element, where the first element corresponds to $p$ elements in the first change parameter that are greater than a first threshold, and $p$ is a positive integer; and the second element corresponds to $q$ elements in the first change parameter that are less than or equal to the first threshold, a value of the second element is 0, and $q$ is a positive integer. The obtaining a window smear parameter includes: determining the window smear parameter based on a weighted sum of a value of at least one fourth change parameter, where the fourth change parameter includes the second element, a third element, and a fourth element; and verifying the first element based on the second change parameter to obtain the third element and the fourth element, where the third element represents $n$ times values of $r$ elements in the first element, the $r$ elements represent an element that is in the second change parameter corresponding to the $r$ elements and that is less than or equal to a second threshold, or the $r$ elements represent an element that is in the second change parameter corresponding to the $r$ elements and that is less than or equal to a third threshold, $r$ is a positive integer, and $n$ is a positive real number less than 1 or is 0. The fourth element represents $S$ elements in the first element, the $S$ elements represent an element that is in the second change parameter corresponding to the $S$ elements and that is greater than the second threshold, or the $S$ elements represent an element that is in the second change parameter corresponding to the $S$ elements and that is greater than the third threshold, and $S$ is a positive integer.

In the technical solution according to this embodiment of this application, the window smear parameter $Z$ obtained by modifying the first change parameter based on the second change parameter provides more accurate window smear information, and eliminates impact of other factors, such as a temperature and power fluctuation of a laser emitter, that cause an excessively high window echo strength, thereby improving accuracy of window smear detection. In addition, a window smear alarm based on the window smear parameter $Z$ can be more accurate, and a smear categorization result based on the modified first change parameter can be more accurate.

With reference to the second aspect, in some implementations of the second aspect, the first processing unit is further configured to determine, based on the window smear parameter and a weight of a smear in each of different window areas, whether to output the alarm information.

With reference to the second aspect, in some implementations of the second aspect, the first processing unit is further configured to determine the weight of the smear in each of the different window areas based on a position of each of the different window areas relative to a moving direction of a mobile device.

With reference to the second aspect, in some implementations of the second aspect, the first processing unit is further configured to determine an alarm coefficient. The determining whether to output the alarm information includes: outputting the alarm information if the window smear alarm coefficient is greater than a smear alarm threshold; or skipping outputting the alarm information if the window smear alarm coefficient is less than or equal to the smear alarm threshold, where the smear alarm threshold is determined based on an application scenario.

In the technical solution according to this embodiment of this application, the window smear alarm coefficient is determined based on a degree of impact of a position of a window smear point on LiDAR performance and a degree of smearing of each smear point. The window smear alarm coefficient can more accurately reflect the degree of smearing of the smear on the LiDAR window, and can reflect the degree of impact, on the LiDAR performance, of the position of the smear on the LiDAR window. Compared with a manner of making an alarm-related decision based on a smear size, this method increases an alarm probability when a small part is severely smeared and an important angle of view is smeared, and reduces an alarm probability when a large part is smeared but there is a slight degree of smearing. The smear alarm threshold varies with a LiDAR application scenario in real time, to well satisfy requirements of using a LiDAR in different scenarios.

With reference to the second aspect, in some implementations of the second aspect, the apparatus further includes a second processing unit. The second processing unit is further configured to: determine a type of a smear on a light detection and ranging front-facing window based on a first change parameter distribution vector and a window smear template, or determine the type of the smear on the light detection and ranging front-facing window based on a fourth change parameter distribution vector and the window smear template, where the type of the smear on the light detection and ranging front-facing window includes a category of the smear and a degree of smearing of the smear.

With reference to the second aspect, in some implementations of the second aspect, the apparatus further includes: The window smear template is determined based on the third change parameter, a window transmissivity, and a flow speed of a smear of each of different degrees of smearing in each of different categories of smears, where the window transmissivity represents the degree of smearing of the type of the window smear.

With reference to the second aspect, in some implementations of the second aspect, the second processing unit is further configured to: determine the type of the window smear based on a matching score $score_I$, where the matching score $score_I$ is determined based on the first change parameter distribution vector and the window smear template or determined based on the fourth change parameter distribution vector and the window smear template; or determine the type of the window smear based on the matching score $score_I$ and a matching score $score_{II}$, where the matching score $score_{II}$ is determined based on a flow speed of the smear obtained based on the first change parameter and a flow speed of the smear in the window smear template or determined based on a flow speed of the smear obtained based on the fourth change parameter and a flow speed of the smear in the window smear template.

In the technical solution according to this embodiment of this application, a type of a smear obtained by window smear template matching and smear flow speed matching is more accurate. In addition, a degree of smearing of the smear can be further obtained. The degree of smearing of the smear is represented by a transmissivity corresponding to a matched window smear template. The accurate category and degree of smearing that are of the smear enable a LiDAR or an MDC to determine a suitable cleaning manner. For example, if the smear is fog, the smear may be cleaned by heating the front-facing window.

According to a third aspect, a computer-readable medium is provided. The computer-readable medium stores program code to be executed by a device, and the program code is used to perform the window smear detection method according to any one of the first aspect or any implementation of the first aspect.

According to a fourth aspect, a computer program product is provided. The computer program product includes computer program code. When the computer program code is run on a computer, the computer is enabled to perform the window smear detection method according to any one of the first aspect or any implementation of the first aspect.

According to a fifth aspect, a chip is provided. The chip includes at least one processor and an interface circuit, and the at least one processor invokes a computer program by using the circuit, so that an apparatus with the chip performs the window smear detection method according to any one of the first aspect or any implementation of the first aspect.

Optionally, in an implementation, the chip may further include a memory. The memory stores instructions, and the processor is configured to execute the instructions stored in the memory. When the instructions are executed, the processor is configured to perform the window smear detection method according to any one of the first aspect and any implementation of the first aspect.

According to a sixth aspect, an apparatus is provided. The apparatus includes a processor and a memory. The memory is configured to store computer program code, and when the computer program code is run on the processor, the apparatus is enabled to perform the window smear detection method according to any one of the first aspect or any implementation of the first aspect.

According to a seventh aspect, a terminal is provided. The terminal includes any window smear detection apparatus according to the second aspect or the second aspect, includes the computer storage medium according to the third aspect, or includes the chip according to the fifth aspect. The terminal includes a vehicle, an unscrewed aerial vehicle, or a robot.

## BRIEF DESCRIPTION OF DRAWINGS

FIG. 1 is a schematic diagram of imaging after a LiDAR window is smeared by water drops according to this application;

FIG. 2 is a schematic diagram of a LiDAR window echo and a target echo according to this application;

FIG. 3 is a schematic diagram of distribution of sensors of an advanced driver assistance system according to an embodiment of this application;

FIG. 4 is a schematic diagram of LiDAR mapping of an unscrewed aerial vehicle according to an embodiment of this application;

FIG. 5 is a schematic diagram of a LiDAR window detection and categorization method in a current technology;

FIG. 6 is a schematic diagram of a LiDAR window smear detection method according to an embodiment of this application;

FIG. 7 is a diagram of a smear parameter change obtained during LiDAR window smear detection according to an embodiment of this application;

FIG. 8 is a schematic diagram of a change of a LiDAR coordinate system according to an embodiment of this application;

FIG. 9 is a schematic diagram of a LiDAR window smear alarming method according to an embodiment of this application;

FIG. 10 is a schematic diagram of a weight $W_{j2}$ of a smear in each of different LiDAR window areas according to an embodiment of this application;

FIG. 11 is a schematic diagram of a method for producing a LiDAR window smear template according to an embodiment of this application;

FIG. 12 is a schematic diagram of a process of producing a LiDAR window smear template according to an embodiment of this application;

FIG. 13 is a schematic diagram of a LiDAR window smear categorization method according to an embodiment of this application;

FIG. 14 is a schematic block diagram of a window smear detection apparatus according to an embodiment of this application; and

FIG. 15 is a schematic block diagram of another window smear detection apparatus according to an embodiment of this application.

## DESCRIPTION OF EMBODIMENTS

Technical solutions of this application are described below with reference to the accompanying drawings. Clearly, the described embodiments are merely some of rather than all embodiments of this application. Based on embodiments of this application, all other embodiments obtained by a person of ordinary skill in the art without creative efforts shall fall within the protection scope of this application.

For brevity of description, light detection and ranging is referred to as LiDAR for short below. It should be understood that there is no difference between the two terms.

For clarity, FIG. 2 is a schematic diagram of a LiDAR window echo and a target echo according to this application. Terms used in this application are first explained with reference to FIG. 2.

Window echo: As laser light from a LiDAR laser emitter 201 is reflected on a surface of a front-facing window 203, a LiDAR detector 202 receives the laser light reflected by the window, and generates an electrical signal. The electrical signal is a window echo of a LiDAR. When there is a smear on the window, the window echo is intensified.

Target echo: As laser light from the LiDAR laser emitter 201 is reflected on a surface of a target 204, the LiDAR detector 202 receives the laser light reflected by the target, and generates an electrical signal. The electrical signal is a target echo of the LiDAR. When there is a smear on the window, the target echo is weakened.

The LiDAR in this application may be applied to an ADAS. FIG. 3 is a schematic diagram of distribution of sensors of an advanced driver assistance system according to an embodiment of this application. The sensors may include an ultrasonic radar 301, a camera 302, and a LiDAR 303, and may further include another sensor. This is not limited in this application.

In this embodiment of this application, the LiDAR 303 may be mounted onto a central position at the front of a vehicle, or may be mounted onto another position in the vehicle, for example, on a left side of the vehicle or on a right side of the vehicle. This is not limited in this embodiment of this application.

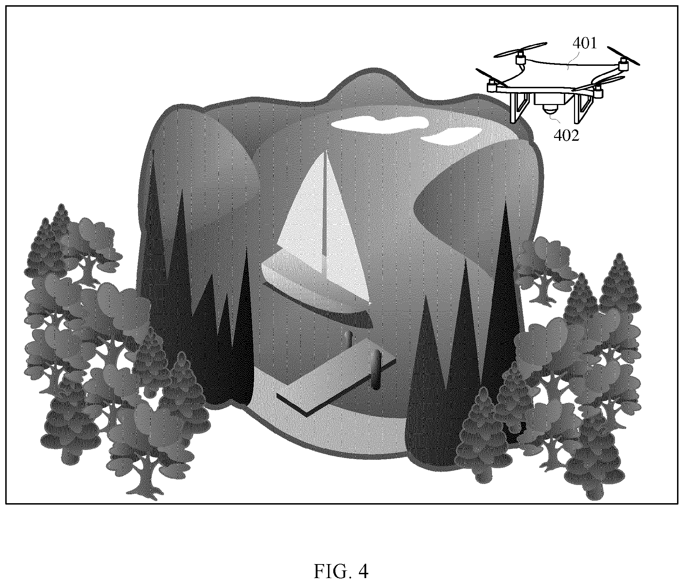

The LiDAR in this application may be further applied to mapping and remote sensing technologies. FIG. 4 is a schematic diagram of LiDAR mapping of an unscrewed aerial vehicle according to an embodiment of this application. 401 is an unscrewed aerial vehicle, and 402 is a LiDAR. The LiDAR on the unscrewed aerial vehicle may perform topographic mapping, or may perform urban traffic mapping. This is not limited in this embodiment of this application.

The LiDAR can quickly and accurately obtain information about a surrounding environment. If a smear appears on a LiDAR window, performance of the LiDAR is affected.

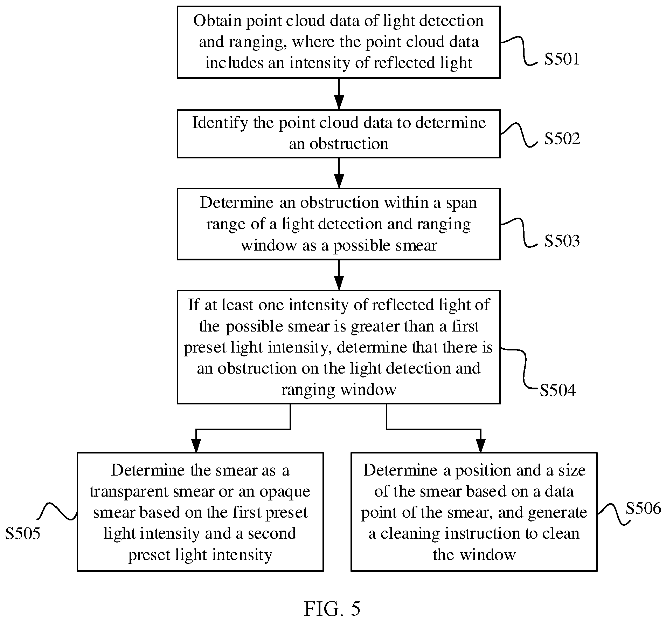

FIG. 5 is a schematic diagram of a LiDAR window detection and categorization method in a current technology. S501: A LiDAR obtains an intensity of reflected light in point cloud data. S502: The point cloud data is identified to determine an obstruction. S503: An obstruction within a span range of a LiDAR window is determined as a possible smear. S504: If at least one intensity of reflected light of the possible smear is greater than a first preset light intensity, it is determined that there is an obstruction on the LiDAR window. S505: The smear is determined as a transparent smear or an opaque smear based on the first preset light intensity and a second preset light intensity. S506: A position and a size of the smear on the window are determined based on a data point of the smear, and a cleaning instruction is generated to clean the window.

In the current technology, a window smear detection result obtained only based on a window echo strength and a single threshold is not accurate. The window echo strength is further affected by other factors such as a temperature, power fluctuation of a laser emitter, and fluctuation of a detector. Therefore, there is a problem of a high false alarm rate when smear detection is performed only based on the window echo strength.

In the current technology, the cleaning instruction is sent only based on the position and the size of the smear on the window. However, the LiDAR is in an unavailable state when the LiDAR window is in a state of requiring cleaning. In this way, it is yet to be considered that smears in different areas of different degrees have different impact on automated driving, and decisions need to be made by considering performance degradation of the LiDAR and temporary unavailability of the LiDAR. That is, the instruction for cleaning the LiDAR needs to be given at suitable time, to reduce impact of the window smear on the LiDAR and reduce duration of the unavailable state of the LiDAR.

The smear is categorized based on the window echo strength and the preset light intensity, but can only be categorized into a transparent smear and an opaque smear. However, different types of smears require different cleaning strategies. For example, an area smeared by mud needs to be cleaned more intensively, while dust evenly scatted on a window needs even cleaning, and fog on a window needs heating. If a smear is categorized into only a transparent smear and an opaque smear, as a result, there is a problem of an unsuitable cleaning strategy as there are insufficient types of smears to be identified and there lacks information about a degree of smearing.

In the current technology, different categories of smears are identified based on a feature of an echo signal after a window is smeared. The feature of the echo signal includes a strength value of a window echo, spatial distribution of a smear, whether a smeared area moves, and whether the smeared area has a target point. Details are shown in Table 1. Table 1 shows signal features of different categories of smears.

**Table 1**

| Signal features | Dust | Water | Rain or snow | Hail | Mud |
|---|---|---|---|---|---|

(continued)

| Signal amplitude | Small | Small | Medium | Large | Large |
|---|---|---|---|---|---|
| Detection mode | Area mode | Area mode | Point mode | Point mode | Area mode |
| Detection area | Whole | Whole | Partial | Partial | Whole or partial |
| Object movement | Not moving | Not moving | Moving | Moving | Moving or not moving |
| Echo signal | Received | Received | Received or not received | Not received | Not received |

In Table 1, the features of the echo signals cannot distinguish between smears of dust and water, and there is also a problem that different degrees of smearing of a same category of smear cannot be distinguished.

To resolve the foregoing technical problems, embodiments of this application provide a method and apparatus for window smear detection, alarming, and categorization.

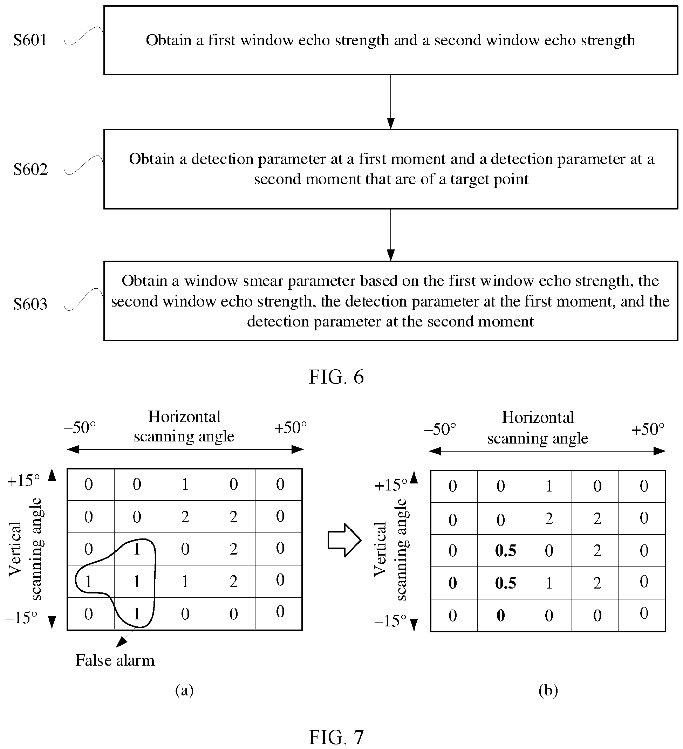

FIG. 6 is a schematic diagram of a LiDAR window smear detection method according to an embodiment of this application.

S601: Obtain a first window echo strength and a second window echo strength, where the first window echo strength represents a reference window echo strength, and the second window echo strength represents a window echo strength at a current moment.

It should be noted herein that an echo is obtained through detection by using a LiDAR detector, and the echo has a corresponding strength. In an implementation, the first window echo strength $P_C$ represents the reference window echo strength, and the reference window echo strength represents a window echo strength acquired when a LiDAR front-facing window is not smeared. The reference window echo strength may be obtained by a LiDAR offline. For example, the reference window echo strength may be a parameter set for the LiDAR before delivery. For another example, the reference window echo strength may alternatively be a parameter acquired by the LiDAR online or an echo strength obtained based on the parameter acquired online. To be specific, the reference window echo strength may be adjusted after delivery of the LiDAR. This is not limited in this embodiment of this application.

In addition, when the first window echo strength is the parameter set for the LiDAR before delivery, an obtaining unit may obtain the preset first window echo strength; and when the first window echo strength is the parameter acquired by the LiDAR online or the echo strength obtained based on the parameter acquired online, the obtaining unit obtains the first window echo strength from a LiDAR detector 202, or obtains the first window echo strength obtained based on echo information from the LiDAR detector 202.

Further, the second window echo strength may be a parameter acquired by the LiDAR online or an echo strength obtained based on the parameter acquired online. The obtaining unit obtains the second window echo strength from the LiDAR detector 202, or obtains the second window echo strength obtained based on echo information from the LiDAR detector 202.

In general, the echo strength obtained in step S601 needs to be used as an input for obtaining or calculating a smear parameter subsequently. Therefore, the echo strength herein may include the echo information fed back to a LiDAR processor after the LiDAR detector detects an echo signal (in this case, the echo information may be used as the echo strength for obtaining or calculating a parameter subsequently), or may include an echo strength obtained after the LiDAR processor further processes the echo information. Related details depend on a structure design or performance of the LiDAR.

S602: Obtain a detection parameter at a first moment and a detection parameter at a second moment that are of a target point, where the detection parameter may include a reflectivity and/or a position coordinate of the target point.

As a possible implementation, inertial measurement unit IMU information may be further obtained. The IMU information is obtained by an IMU by obtaining a rotational angular velocity and a linear moving velocity of the LiDAR in a LiDAR coordinate system. If the IMU is mounted onto a vehicle, obtained IMU information in a vehicle coordinate system needs to be converted into the IMU information in the LiDAR coordinate system. If the IMU is mounted onto the LiDAR, coordinates do not need to be converted. This is not limited in this embodiment of this application.

S603: Obtain a window smear parameter based on the first window echo strength, the second window echo strength, the detection parameter at the first moment, and the detection parameter at the second moment.

In an implementation, the window smear parameter is obtained based on a first change parameter and a second change parameter. The first change parameter is in a one-to-one correspondence with the second change parameter.

It should be understood that the first change parameter is used to indicate a change between the first window echo strength $P_C$ and the second window echo strength $P$. The first change parameter may be a difference between the second window echo strength $P$ and the first window echo strength $P_C$, that is, $P-P_C$, or the first change parameter may be a ratio of the second window echo strength $P$ to the first window echo strength $P_C$, that is, $P/P_C$. This is not limited in this embodiment of this application.

It should be understood that the second change parameter is used to verify an element that is in the first change parameter and that is determined as a window smear point, to improve accuracy of window smear detection.

It should be understood that, if the first change parameter is the ratio of the second window echo strength $P$ to the first window echo strength $P_C$, a first threshold may be 1.2. This is not limited in this embodiment of this application. If the first change parameter is the difference between the second window echo strength $P$ and the first window echo strength $P_C$, a value of the first threshold depends on a range of a strength of an output of the LiDAR detector. This is not limited in this embodiment of this application.

In an implementation, the first change parameter includes a plurality of elements. Each of the elements in the first change parameter is a window echo strength of a point on the LiDAR front-facing window, and whether the point corresponding to the elements is smeared is determined by determining whether a value of each element in the plurality of elements is greater than the first threshold.

A fifth change parameter includes a first element and a second element. The first element corresponds to $p$ elements in the first change parameter that are greater than the first threshold. To be specific, a position on a LiDAR window corresponding to each element in the $p$ elements is smeared, and $p$ is a positive integer. In other words, in this embodiment of this application, a quantity of elements in the first change parameter that are greater than the first threshold is not limited, and may be one or more.

The second element corresponds to $q$ elements in the first change parameter that are less than or equal to the first threshold. In this case, LiDAR window points corresponding to the $q$ elements are not smeared. A value of each element in the $q$ elements is 0, and $q$ is a positive integer. In other words, in this embodiment of this application, a quantity of elements in the first change parameter that are less than or equal to the first threshold is not limited, and may be one or more.

Compared with determining whether there is a smear on the LiDAR window based on a window echo strength, determining whether there is a smear on the LiDAR window based on the first change parameter is advantageous in that a window echo strength change parameter can more clearly reflect, by showing a multiple relationship or a difference relationship, a difference between window echo strengths before and after the window is smeared, and is not affected by a magnitude of an echo strength of a window that is not smeared.

FIG. 7 is a diagram of a window smear parameter change obtained during LiDAR window smear detection according to an embodiment of this application.

A field of view (field of view, FOV) of the LiDAR is determined by horizontal scanning and vertical scanning of the LiDAR. For example, a range of a horizontal scanning angle of the LiDAR may be [-50°, +50°], and a range of a vertical scanning angle of the LiDAR may be [-15°, +15°]. This is not limited in this embodiment of this application.

It should be understood that the first element is verified based on the second change parameter, to obtain the window smear parameter $Z$, as shown in FIG. 7.

Because the window echo strength is affected and changed by other factors, whether a smear point in the first element is a real smear point is verified based on the second change parameter, to modify the first element, thereby obtaining a more accurate window smear parameter $Z$. The window smear parameter may be in a form of a matrix or in a form of another parameter. This is not limited in this embodiment of this application.

A basis for verifying the smear point in the first element based on the second change parameter is that if there is a smear on the LiDAR window, a reflectivity of a smeared target point decreases, and distance measurement precision is reduced. The second change parameter includes a change between a reflectivity at the first moment and a reflectivity at the second moment that are of the target point and that are obtained by the LiDAR, or a change between an actual value of a position coordinate of the target point at the first moment and an estimated value of the position coordinate at the first moment. The estimated value of the position coordinate at the first moment is obtained by converting a position coordinate at the second moment based on the IMU information.

It should be understood that, to verify whether the smear point in the first element is a real smear point, the verification may be performed based on only information about a position coordinate change of the target point, or the verification may be performed based on only information about a reflectivity change of the target point.

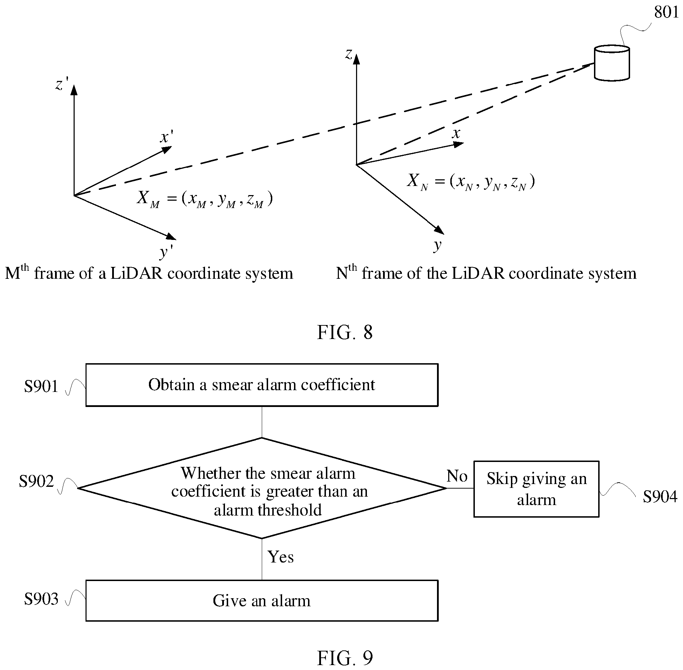

With reference to FIG. 8, verifying whether the smear point in the first element is a real smear point based on the second change parameter is described in detail below. FIG. 8 is a schematic diagram of a change of a LiDAR coordinate system according to an embodiment of this application.

If there is a smear at a point in an $N^{th}$ frame of a window, that is, there is a smear at a point corresponding to an element in the first element, coordinates of a target point in an $N^{th}$ frame of the LiDAR coordinate system, that is, position coordinates of the target point at the second moment, is denoted as $X_N = (x_N, y_N, z_N)$. According to kinematics, based on the IMU information, estimated coordinates $X_M = (x_M, y_M, z_M)$ of the target point in an $M^{th}$ frame of the LiDAR coordinate system when there is no smear on the window, that is, estimated values of position coordinates at the first moment, is obtained through estimation. Actual coordinates of the target point in the $M^{th}$ frame of the LiDAR coordinate system at a corresponding angle, that is, actual values of the position coordinates at the first moment, is $X_M' = (x_M', y_M', z_M')$. If a change value between $X_M$ and $X_M'$ is greater than a second threshold, it is determined that there is a smear at the point, and the corresponding first element is not modified. An unmodified first element is represented as a fourth element. To be specific, the fourth element represents $S$ elements in the first element, the $S$ elements represent an element that is in the second change parameter corresponding to the $S$ elements and that is greater than the second threshold, and $S$ is a positive integer. If the change value between $X_M$ and $X_M'$ is less than or equal to the second threshold, there is no smear at the point. In other words, the corresponding first element is a false alarm parameter, and the first element is modified. A modification manner is to modify a value of the first element to be $n$ times the value of the first element. The modified first element is a third element. To be specific, the third element represents $r$ elements in the first element, and the $r$ elements represent an element that is in the second change parameter corresponding to the $r$ elements and that is less than or equal to the second threshold. $r$ is a positive integer, and $n$ is a positive real number less than 1 or is 0. The window smear parameter $Z$ is determined based on a weighted sum of a value of at least one fourth change parameter. The fourth change parameter includes the second element, the third element, and the fourth element, as shown in FIG. 7.

If there is a smear at a point in the $N^{th}$ frame of the window, that is, there is a smear at a point corresponding to an element in the first element, reflectivities of the target point in the $N^{th}$ frame, that is, a reflectivity of the target point at the second moment and a reflectivity of the target point in the $M^{th}$ frame when there is no smear on the window, that is, the reflectivity of the target point at the first moment may be compared to obtain a difference. If the difference is greater than a third threshold, it is determined that there is a smear at the point, and the corresponding first element is not modified. An unmodified first element is represented as a fourth element. To be specific, the fourth element represents $S$ elements in the first element, the $S$ elements represent an element that is in the second change parameter corresponding to the $S$ elements and that is greater than the second threshold, and $S$ is a positive integer. If the difference is less than or equal to the third threshold, there is no smear at the point. In other words, the corresponding first element is a false alarm parameter, and the first element is modified. A modification manner is to modify a value of the first element to be $n$ times the value. The modified first element is a third element. To be specific, the third element represents $r$ elements in the first element, and the $r$ elements represent an element that is in the second change parameter corresponding to the $r$ elements and that is less than or equal to the second threshold. $r$ is a positive integer, and $n$ is a positive real number less than 1 or is 0. The window smear parameter $Z$ is determined based on the weighted sum of the value of the at least one fourth change parameter. The fourth change parameter includes the second element, the third element, and the fourth element, as shown in FIG. 7. It should be understood that, M and N are both positive integers, and M is less than N.

An FOV of a LiDAR may be divided into areas by using a grid. Each area is in a one-to-one correspondence with each section of the grid. A value of the window smear parameter $Z$ of each area depends on the weighted sum of the value of the at least one fourth change parameter corresponding to all points in the area. It should be understood that, when there is no smear in an area, a value of the area in the window smear parameter $Z$ is 0.

The window smear parameter $Z$ obtained by modifying the first change parameter based on the second change parameter provides more accurate window smear information, and eliminates impact of other factors, such as a temperature and power fluctuation of a laser emitter, that cause an excessively high window echo strength, thereby improving accuracy of window smear detection. In addition, a window smear alarm based on $Z$ can be more accurate, and a smear categorization result based on the modified first change parameter can be more accurate.

S604: Output at least one of alarm information, the first change parameter, or the window smear parameter, where the alarm information is used to prompt a window smear status, and the first change parameter corresponds to smear categorization and/or smear area division.

It should be understood that at least one of the alarm information, the first change parameter, or the window smear parameter is output to a multi domain controller (Multi Domain Controller, MDC) that may also be referred to as an intelligent driving domain controller.

It should be understood that the window smear parameter is used to indicate a smear distribution status of a smear on a LiDAR front-facing window.

It should be understood that the first change parameter corresponds to the smear categorization and/or the smear area division, that is, the first change parameter is used for the smear categorization and/or the smear area division. The smear area division is to divide an area of a smear on the LiDAR front-facing window, and a subarea of the smear on the window may be preliminarily obtained by performing the smear area division based on the first change parameter. The smear categorization is to categorize a smear on the LiDAR front-facing window, and a type of the smear may be preliminarily obtained by performing the smear categorization based on the first change parameter.

It should be understood that whether to output the alarm information is determined based on the window smear parameter and a weight of a smear in each of different window areas. Detailed description is provided below with reference to FIG. 9. FIG. 9 is a schematic diagram of a LiDAR window smear alarming method according to an embodiment of this application.

The weight of the smear in each of the different window areas is used to indicate a degree of impact of a window area of the LiDAR front-facing window with a smear point on performance of a LiDAR. A larger weight of a smear in a window area indicates a greater impact on the performance of the LiDAR when the area is smeared. A smaller weight of a smear in a window area indicates a smaller impact on the performance of the LiDAR when the area is smeared.

S901: Obtain a window smear alarm coefficient based on a weight $W_{i1}$ of a degree of smearing of a window smear point and a weight $W_{j2}$ of a smear in each of different window areas, where $i$ represents different points on the window, $j$ represents different window areas, and $i$ and $j$ are positive integers.

The weight $W_{i1}$ of the degree of smearing of the window smear point may be obtained based on a ratio of a second window echo strength $P_i$ of an $i$th point on the window and a first window echo strength $P_{iC}$ of the point or a difference between the strengths, that is, $W_{i1} = P_i / P_{iC}$ or $W_{i1} = P_i - P_{iC}$, that is, the first change parameter of the point. This is not limited in this embodiment of this application.

The weight $W_{j2}$ of the smear in each of the different window areas may be determined by the LiDAR, or may be determined based on a performance requirement of an ADAS. This is not limited in this application.

If the weight $W_{j2}$ of the smear in each of the different window areas is determined by the LiDAR, the weight may be related to a position at which the LiDAR is mounted onto a mobile device. A window area closer to a motion center of the mobile device has a greater weight $W_{j2}$ of a smear, as a target in an environment in a direction of the motion center of the mobile device has greater impact on subsequent motion planning or decision-making of the mobile device than a target in an environment nearby the direction of the motion center of the mobile device. Therefore, an area of a LiDAR window closer to the motion center of the mobile device has a greater weight $W_{j2}$ of a smear. The weight of the smear in each of the different window areas may alternatively be determined based on an actual LiDAR performance requirement. This is not limited in this embodiment of this application.

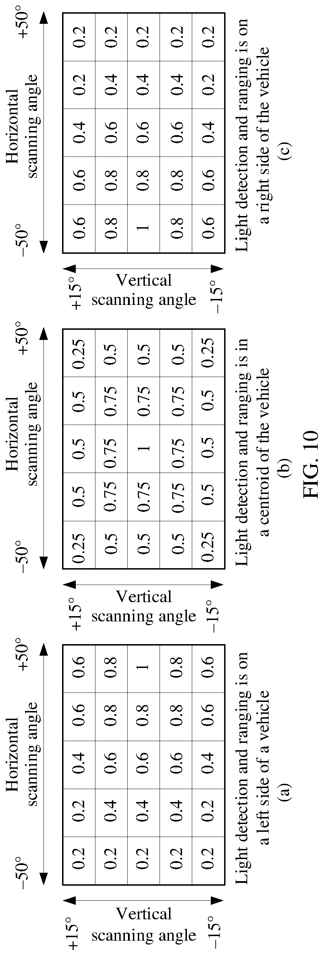

A LiDAR mounted onto a vehicle is used as an example. The weight $W_{j2}$ of the smear in each of the different windows is described below by using an example with reference to FIG. 10. FIG. 10 is a schematic diagram of a weight $W_{j2}$ of a smear in each of different LiDAR window areas according to an embodiment of this application.

As shown in (b) in FIG. 10, if a LiDAR is mounted onto a central position at the front of a vehicle, a central position area of the window is the most important area. Therefore, a weight of a smear in the central area of the window may be set to 1, and importance of an area around the central area of the window is only second to that of the central area of the window, and may be set to 0.75. By analogy, each area of the window has a weight of a smear based on a degree of importance. It should be understood that the weight $W_{j2}$ of the smear in each of the different window areas in FIG. 10 is merely used as an example, and a value of the weight is not limited in this application.

As shown in (a) in FIG. 10, if the LiDAR is mounted onto a left side of the vehicle, a right area in the middle of the window is the most important area. Therefore, a weight of a smear in the right area in the middle of the window may be set to 1, and importance of the right area in the middle of the window is only second to that of the central area of the window, and may be set to 0.8. By analogy, each area of the window has a weight of a smear based on a degree of importance. It should be understood that the weight $W_{j2}$ of the smear in each of the different window areas in FIG. 10 is merely used as an example, and a value of the weight is not limited in this application.

As shown in (c) in FIG. 10, if the LiDAR is mounted onto a left side of the vehicle, a right area in the middle of the window is the most important area. Therefore, a weight of a smear in the left area in the middle of the window may be set to 1, and importance of the left area in the middle of the window is only second to that of the central area of the window, and may be set to 0.8. By analogy, each area of the window has a weight of a smear based on a degree of importance. It should be understood that the weight $W_{j2}$ of the smear in each of the different window areas in FIG. 10 is merely used as an example, and a value of the weight is not limited in this application.

A weighted sum operation is performed on the weight $W_{i1}$ of the degree of smearing of the window smear point and the weight $W_{j2}$ of the smear in a window area to which the smear point belongs, to obtain the smear alarm coefficient $W$, that is,

$$W = \sum W_{i1} \times W_{j2}$$

.

S902: Determine whether the smear alarm coefficient is greater than an alarm threshold; and if the smear alarm coefficient is greater than the smear alarm threshold, perform S903 to enable an alarm instruction; or if the smear alarm coefficient is not greater than the smear alarm threshold, perform S904 to skip enabling the alarm instruction.

It should be understood that, after the smear alarm instruction is enabled, the LiDAR window needs to be cleaned, and the LiDAR is in an unavailable state. To satisfy requirements for using the LiDAR in different scenarios, the smear alarm threshold varies with real-time scenarios.

For example, in the field of self-driving, the smear alarm threshold in an open and unpopulated suburban area is lower than that in a hustling urban area. An environment target in the hustling urban area is more complex and changeable than that in the open and unpopulated suburban area, and a LiDAR needs to be in an available state for a long time. However, in a scenario in the open and unpopulated suburban area, a requirement for the LiDAR being in the available state is lower than that in a scenario in the hustling urban area. Therefore, different smear alarm thresholds are set in different scenarios to well satisfy requirements of using the LiDAR in the different scenarios.

The obtained window smear alarm coefficient in this embodiment of this application is determined based on a degree of impact of a position of a window smear point on performance of the LiDAR and a degree of smearing of each smear point. The window smear alarm coefficient can more accurately reflect the degree of smearing of the smear on the LiDAR window, and can reflect the degree of impact, on the LiDAR performance, of the position of the smear on the LiDAR window. Compared with a manner of making an alarm-related decision based on a smear size in a current technology, this method increases an alarm probability when a small part is severely smeared and an important angle of view is smeared, and reduces an alarm probability when a large part is smeared but there is a slight degree of smearing.

In addition, in this embodiment of this application, the smear alarm threshold varies with a LiDAR application scenario in real time, to well satisfy requirements of using the LiDAR in different scenarios.

When there is a smear on a LiDAR front-facing window, not only an alarm needs to be given to the LiDAR, the smear also needs to be categorized to obtain a category and a degree of smearing that are of the smear. A processor of the LiDAR may categorize the smear, and a processor of an MDC may alternatively categorize the smear. This is not limited in this embodiment of this application.

In addition, there is no sequence limitation between the window smear alarming and categorization. The alarming and the categorization may be performed at a same time, the alarming may be performed before the categorization, or the categorization may be performed first, where a categorization result is used as an output of alarm information. This is not limited in this embodiment of this application.

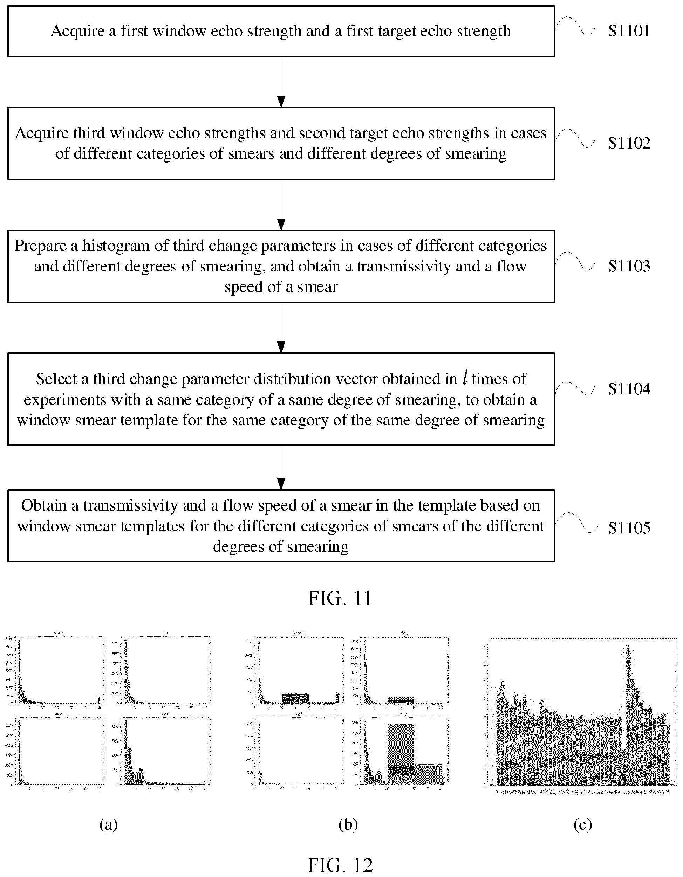

Before LiDAR window smears are categorized, a window smear template needs to be produced. A method for producing a window smear template is described below with reference to FIG. 11. FIG. 11 is a schematic diagram of a method for producing a LiDAR window smear template according to an embodiment of this application.

It should be understood that the window smear template should be produced before a LiDAR is put into actual use.

S1101: Acquire a first window echo strength and a first target echo strength $p_y$.

It should be understood that a first window echo strength $P_C$ acquired by the LiDAR in an open area, that is, a first window echo strength preset by the LiDAR before delivery, may be used for window smear detection. A first window echo strength $p_c$ acquired by the LiDAR in a stable environment with a stationary target and a suitable distance may be used for producing the window smear template. The first target echo strength $p_y$ is a target echo strength when there is no smear on a LiDAR front-facing window.

The first window echo strength includes a first window echo strength of all points in a frame, and the window echo strength of all the points in the frame may be obtained based on a median or a mean of window echo strengths of corresponding points in a plurality of frames.

A condition to be satisfied for a suitable distance to the target is that the target object can be detected in all directions within the field of view of LiDAR, and a window echo and a target echo do not overlap.

S1102: Acquire third window echo strengths $p_c$' and second target echo strengths $p_y$' in cases of different categories of smears and different degrees of smearing.

It should be understood that, to improve accuracy and reliability of experimental data, a third window echo strength and a second target echo strength that are of a same category of smear of a same degree of smearing are acquired and obtained through a plurality of times of experiments.

A category of a smear may be water, fog, dust, mud, or white paper. This is not limited in this embodiment of this application.

S1103: Prepare a histogram of the third change parameters in cases of different categories and different degrees of smearing, and obtain a transmissivity and a flow speed of a smear.

The third change parameter may be represented by a difference, that is, $p_c$'-$p_c$, between the third window echo strength $p_c$' and the first window echo strength $p_c$, or may be represented by a ratio, that is, $p_c$'/$p_c$ of the third window echo strength $p_c$' to the first window echo strength $p_c$.

The histogram of the third change parameters is used to illustrate window echo strength change parameters of all points after the window is smeared. FIG. 12 is a schematic diagram of a process of producing a LiDAR window smear template according to an embodiment of this application. (a) in FIG. 12 is a histogram of the third change parameters after one experiment with different categories of smears. That is, the histogram of the third change parameters of all the points of the window as shown in (a) in FIG. 12 can be obtained after each experiment.

A horizontal coordinate $T$ in the histogram of the third change parameters represents a boundary of a third change parameter range, and $T = [t_1,..., t_{n+1}]$. A vertical coordinate $U$ is third change parameter distribution vectors of all the points, and $U = [\mu_1,..., \mu_n]$. $\mu_a$ represents a quantity of points in the third change parameter range $[t_a, t_{a+1}]$. $a \in n$, and $n$ is a positive integer.

Optionally, a normalized distribution vector $U/|U|_1$ may alternatively be used to represent the third change parameter distribution vectors of all the points.

When a degree of smearing of a smear is slight, for example, when only a small part of the window is smeared, values of third change parameters of most points are relatively small, and values of third change parameters of a few points are relatively large. However, points that have great impact on the smear categorization are the few points with large values of third change parameters. Therefore, different normalization processes may be further performed for different ranges, to reduce impact of a window smear size on the window smear categorization. In this way, there can be a larger difference between third change parameter distribution vectors of a same category of smear of different degrees of smearing, thereby producing a more diversified window smear template. (b) in FIG. 12 is a histogram in which the boundary $T$ has changed, illustrating a preparation for different normalization processes for different ranges.

For example, a third change parameter distribution vector $U_5 = [\mu_1, \mu_2, \mu_3, \mu_4, \mu_5]$ in third change parameter ranges $[t_1,t_2]$, $[t_2,t_3]$, $[t_3,t_4]$, $[t_4,t_5]$, and $[t_5,t_6]$, may be normalized to obtain a distribution vector $\mu_a = U_5/|U_5|_1$ , and $a \in [1,5]$. A third change parameter distribution vector $U_{n-5} = [\mu_6,\mu_7,\mu_8,...,\mu_n]$ in remaining third change parameter ranges $[t_6,t_7],[t_7,t_8]$, $[t_8,t_9]$, ..., $[t_n,t_{n+1}]$ is normalized to obtain a distribution vector $\mu_b = U_{n-5}/|U_{n-5}|_1$. $a \in [6,n]$, and $n$ is a positive integer.

A degree of smearing of a smear may be represented by a window transmissivity $\alpha$. A transmissivity $\alpha_i$ of each point is a square root of a ratio of a second target echo strength $p_{iy}'$ to a first target echo strength $p_{iy}$ of the point, that

$$\alpha_i = \sqrt{p_{iy}' / p_{iy}}$$

is, . The window transmissivity $\alpha$ is a mean of transmissivities $\alpha_i$ of all points.

It should be understood that, in each experiment, third window echo strengths $p_c'$ and second target echo strengths $p_y'$ of all the points in the experiment and the window transmissivity $\alpha$ in the experiment are obtained. The third window echo strength of each point is a median of third window echo strengths of the point in a plurality of frames in the experiment, and the second target echo strength of each point is a median of second target echo strengths of the point in a plurality of frames in the experiment.

A flow speed of each of different smears is represented by a maximum value and a minimum value of the flow speed of each of the different smears, that is, $v \in [v_{min},v_{max}]$ . $v_{min}$ and $v_{max}$ are empirical values. Values of flow speeds of same categories of smears are the same. For example, a flow speed of smears that are not flowable such as dust and mud is 0, and a value of a flow speed of a flowable smear, for example, rainwater, is an empirical value. This is not limited in this embodiment of this application.

An experiment with a smear of a same category of a same degree of smearing is carried out $l$ times. A same category of smear has $k$ degrees of smearing, and there are $m$ categories of smears. Steps S1102 and S1103 are repeated, and a corresponding distribution vector of window echo strength change parameters and a corresponding transmissivity are obtained in each experiment. Degrees of smearing $k$ of different categories of smears may have different values.

S1104: Select a third change parameter distribution vector obtained in the $l$ times of experiments with the same category of the same degree of smearing, to obtain a window smear template for the same category of the same degree of smearing, and there are $k$ window smear templates for the same category of different degrees of smearing.

It should be understood that, during the selection, a clustering algorithm, for example, a clustering method of K-means clustering may be used. This is not limited in this embodiment of this application. (c) in FIG. 12 shows window smear templates for different categories of smears of different degrees of smearing after normalization and clustering. A quantity $y$ of templates equals to $m$ categories of smears times $k$ degrees of smearing, that is, $y = mk$.

S1105: Obtain a transmissivity and a flow speed of a smear in the template based on window smear templates for the different categories of smears of the different degrees of smearing.

It should be understood that, as one third change parameter distribution vector and a corresponding transmissivity are obtained in each experiment, a specific transmissivity needs to be selected, from the transmissivity corresponding to the third change parameter distribution vector obtained in the $l$ times of experiments with the same category of the same degree of smearing, as a transmissivity in a clustered window smear template.

A specific basis for the selection is a matching score $score_x = -|o_x - S_y|$ of the third change parameter distribution vector obtained in the $l$ times of experiments and the window smear template for the same category of the same degree of smearing. $o_x$ is the third change parameter distribution vector, of the same category of the same degree of smearing, obtained in the $l$ times, and $x \in [1,l]$. $S_y$ is the window smear template for the same category of the same degree of smearing, and $y \in [1,mk]$ . A higher matching score $score_x$ indicates a transmissivity that corresponds to a third change parameter distribution vector in an experiment and that is closer to the transmissivity in the window smear template. The window smear template for the same category of the same degree of smearing includes one transmissivity $\alpha_y$ obtained through template matching, and $y \in [1,mk]$.

A transmissivity corresponding to a third change parameter distribution vector with a highest matching score may be selected to be the transmissivity of the window smear template $\alpha_y$, or the transmissivity of the window smear template may be obtained by calculating a median or a mean of transmissivities corresponding to a plurality of third change parameter distribution vectors each with a high matching score $score_x$. A maximum value and a minimum value of the transmissivities corresponding to the plurality of third change parameter distribution vectors each with a high matching score $score_x$ may be used as a transmissivity range ($\alpha_y' = [\alpha_{min}, [\alpha_{max}]$ of the window smear template. This is not limited in this embodiment of this application.

It should be understood that, flow speeds of smears in different templates depend on categories of the smears, and a flow speed of each of different smears is represented by a maximum value and a minimum value of the flow speed of each of the different smears, that is, $v \in [v_{min}, v_{max}]$. $v_{min}$ and $v_{max}$ are empirical values.

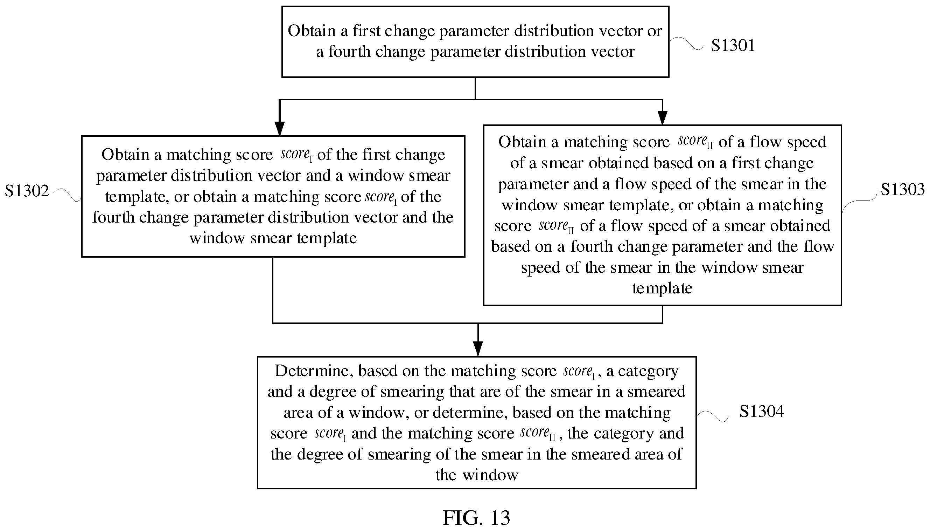

A LiDAR window smear categorization method is described below with reference to the window smear template and FIG. 13. FIG. 13 is a schematic diagram of a LiDAR window smear categorization method according to an embodiment of this application.

S1301: Obtain a first change parameter distribution vector or a fourth change parameter distribution vector.

It should be understood that both a first change parameter and a fourth change parameter verified based on a second change parameter may be used as an input parameter for the window smear categorization.

A manner of obtaining the first change parameter distribution vector is the same as a manner of obtaining the third change parameter distribution vector, and a manner of obtaining the fourth change parameter distribution vector is the same as the manner of obtaining the third change parameter distribution vector. Details are not described herein again.

S1302: Obtain a matching score $score_I$ of the first change parameter distribution vector and the window smear template, or obtain a matching score $score_I$ of the fourth change parameter distribution vector and the window smear template.

It should be understood that, $O$ is a first change parameter distribution vector of a current smeared window area, $S_y$ is a window smear template, where $y \in [1, mk]$. A matching score is $score_I = -|O - S_y|_1$. The closer the matching score $score_I$ is to 0, the closer the first change parameter distribution vector of the current smeared window area is to the window template. In this case, it indicates that a category and a degree of smearing that are of a smear in the current window smeared area are closer to the window template.

S1303: Obtain a matching score $score_{II}$ of a flow speed of a smear obtained based on the first change parameter and a flow speed of the smear in the window smear template, or obtain a matching score $score_{II}$ of a flow speed of a smear obtained based on the fourth change parameter and the flow speed of the smear in the window smear template.

It should be understood that, a flow speed $v_{flow}$ of a smear in the current smeared window area may be obtained based on $Z$ obtained in S604, that is, the window smear parameter obtained based on the weighted sum of the value of the at least one fourth change parameter. Specifically, $v_{flow} = |Z_N - Z_{N+1}|_1 / |Z_N|_1$. $Z_N$ is a window smear parameter in an $N^{th}$ frame, and $Z_{N+1}$ is a window smear parameter in an $(N+1)^{th}$ frame. The flow speed $v_{flow}$ of the smear in the current smeared window area may alternatively be obtained based on a second window smear parameter obtained based on a weighted sum of a value of at least one first change parameter. This is not limited in this embodiment of this application. A matching score is $score_{II} = -\min_{v \in [v_{min}, v_{max}]} |v_{flow} - v|_1$. When the matching score is closer to 0, the flow speed of the smear in the current smeared window area is within a flow speed range of the smear in the template, and it indicates that a category and a degree of smearing that are of the smear in the current smeared window area are closer to a category and a degree of smearing that are of the smear in the template.

S1304: Determine, based on the matching score $score_I$, the category and the degree of smearing that are of the smear in the smeared window area, or determine, based on the matching score $score_I$ and the matching score $score_{II}$, the category and the degree of smearing that are of the smear in the smeared area.

In an implementation, in this embodiment of this application, the category and the degree of smearing that are of the smear in the smeared window area may be determined only based on the matching score $score_I$. In this case, the category of the smear is obtained based on a category of the smear in a matched window smear template, and the degree of smearing of the smear is represented by a transmissivity corresponding to the matched window smear template.

In an implementation, in this embodiment of this application, the category and the degree of smearing that are of the smear in the smeared window area may alternatively be determined based on the matching score $score_I$ and the matching score $score_{II}$. The category of the smear is obtained based on a category of the smear corresponding to both a matched window smear template and a matched flow speed of the smear, and the degree of smearing of the smear is represented by a transmissivity corresponding to the matched window smear template.

A category of a smear obtained by window smear template matching and smear flow speed matching is more accurate. In addition, a degree of smearing of the smear can be further obtained. The degree of smearing of the smear is represented by a transmissivity corresponding to a matched window smear template. The accurate type and degree of smearing that are of the smear enable a LiDAR or an MDC to determine a suitable cleaning manner. For example, if the smear is fog, the smear may be cleaned by heating the front-facing window.

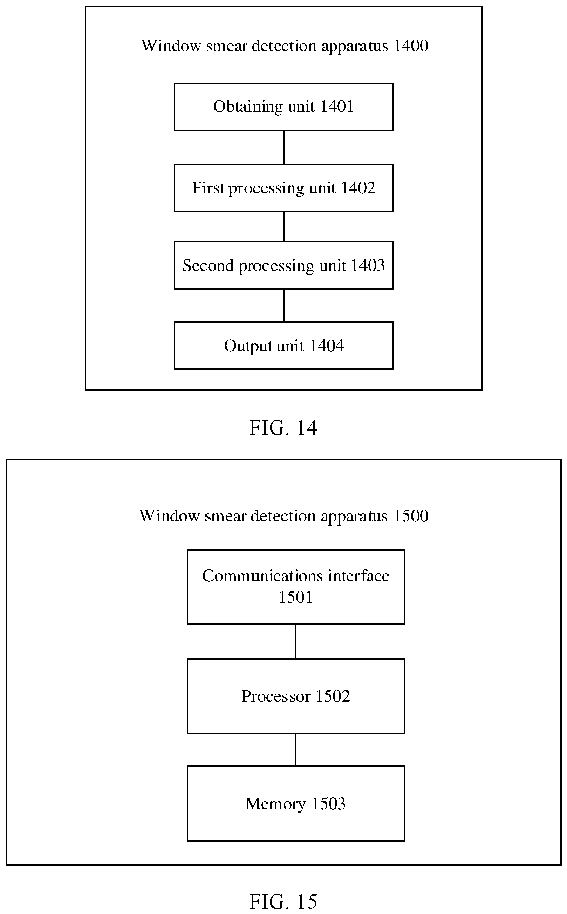

With reference to FIG. 1 to FIG. 13, the embodiments of the window smear detection method in this application are described above in detail. Apparatus embodiments of this application are described below with reference to FIG. 14 to FIG. 15. For descriptions that are not provided in detail, refer to the foregoing method embodiments.

FIG. 14 is a schematic block diagram of a window smear detection apparatus according to an embodiment of this application.

The window smear detection apparatus 1400 in FIG. 14 may be configured to implement corresponding functions in the embodiments in FIG. 1 to FIG. 13. To avoid repetition, details are not described again. The window smear detection apparatus in FIG. 14 may include an obtaining unit 1401, a first processing unit 1402, and a second processing unit 1403. Optionally, the window smear detection apparatus 1400 further includes an output unit 1404.

The obtaining unit 1401 is configured to obtain a first window echo strength and a second window echo strength, where the first window echo strength represents a reference window echo strength, and the second window echo strength represents a window echo strength at a current moment. The obtaining unit 1401 is further configured to obtain a detection parameter at a first moment and a detection parameter at a second moment that are of a target point, where the detection parameter includes a reflectivity and/or a position coordinate of the target point.

The first processing unit 1402 is configured to obtain a window smear parameter based on the first window echo strength, the second window echo strength, the detection parameter at the first moment, and the detection parameter at the second moment, where the window smear parameter is used to indicate a window smear status.

Optionally, in an embodiment, the first processing unit 1402 is further configured to obtain the window smear parameter based on a first change parameter and a second change parameter. The first change parameter includes a difference between the second window echo strength and the first window echo strength, or a ratio of the second window echo strength to the first window echo strength. The second change parameter indicates a change between a reflectivity at the first moment and a reflectivity at the second moment that are of the target point, or a change between an actual value of a position coordinate of the target point at the first moment and an estimated value of the position coordinate at the first moment. The estimated value of the position coordinate at the first moment is obtained based on a position coordinate at the second moment.

Optionally, in an embodiment, the window smear detection apparatus 1400 further includes the output unit 1404. The output unit 1404 is configured to output at least one of alarm information, the first change parameter, or the window smear parameter. The alarm information is used to prompt the window smear status, and the first change parameter corresponds to smear categorization and/or smear area division.

Optionally, in an embodiment, the first change parameter includes a first element and a second element. The first element represents $p$ elements in the first change parameter that are greater than a first threshold, and $p$ is a positive integer. The second element represents $q$ elements in the first change parameter that are less than or equal to the first threshold. Optionally, a value of the second element may be 0, and $q$ is a positive integer.

When obtaining the window smear parameter, the obtaining unit 1401 may determine the window smear parameter based on a weighted sum of a value of at least one fourth change parameter. The fourth change parameter includes the second element, a third element, and a fourth element. The first element is verified based on the second change parameter to obtain the third element and the fourth element, where the third element represents $n$ times values of $r$ elements in the first element, the $r$ elements indicates that a value of the second change parameter corresponding to the $r$ elements is less than or equal to a second threshold, or the $r$ elements indicates that a value of the second change parameter corresponding to the $r$ elements is less than or equal to a third threshold, $r$ is a positive integer, and $n$ is a positive real number less than 1 or is 0. The fourth element represents $S$ elements in the first element, the $S$ elements indicates that a value of the second change parameter corresponding to the $S$ elements is greater than the second threshold, or the $S$ elements indicates that a value of the second change parameter corresponding to the $S$ elements is greater than the third threshold, and $S$ is a positive integer.

Optionally, in an embodiment, the first processing unit 1402 is further configured to determine, based on the window smear parameter and a weight of a smear in each of different window areas, whether to output the alarm information.

Optionally, in an embodiment, for the weight of the smear in each of the different window areas, the first processing unit determines the weight of the smear in each of the different window areas based on a position of each of the different window areas relative to a moving direction of a mobile device.

Optionally, in an embodiment, the first processing unit 1402 is further configured to determine an alarm coefficient. The determining whether to output the alarm information includes: executing an alarm instruction if the window smear alarm coefficient is greater than a smear alarm threshold; or skipping executing the alarm instruction if the window smear alarm coefficient is less than or equal to the smear alarm threshold, where the smear alarm threshold is determined based on an application scenario.

Optionally, in an embodiment, the second processing unit is configured to: determine a type of a smear on a light detection and ranging front-facing window based on a first change parameter distribution vector and a window smear template, or determine the type of the smear on the light detection and ranging front-facing window based on a fourth change parameter distribution vector and the window smear template, where the type of the smear on the light detection and ranging front-facing window includes a category of the smear and a degree of smearing of the smear.

It should be understood that the second processing unit 1403 may represent the first processing unit 1402 of the internal window detection apparatus for light detection and ranging, or may represent a processing unit of an MDC. This is not limited in this embodiment of this application.

Optionally, in an embodiment, the window smear template is determined based on a third change parameter, a window transmissivity, and a smear flow speed of each of different categories of smears of different degrees of smearing, where the window transmissivity represents the degree of smearing of the category of the window smear.

Optionally, in an embodiment, the determining a type of a light detection and ranging window smear includes: The second processing unit 1403 is further configured to: determine the type of the window smear based on a matching score $score_I$, where the matching score $score_I$ is determined based on the first change parameter distribution vector and the window smear template or determined based on the fourth change parameter distribution vector and the window smear template; or determine the type of the window smear based on the matching score $score_I$ and a matching score $score_{II}$, where the matching score $score_{II}$ is determined based on a flow speed of the smear obtained based on the first change parameter and a flow speed of the smear in the window smear template or determined based on a flow speed of the smear obtained based on the fourth change parameter and a flow speed of the smear in the window smear template.

The window smear detection apparatus 1400 in this embodiment of this application may be implemented in any suitable form. In an embodiment, the window smear detection apparatus 1400 may be a LiDAR apparatus or a component inside the LiDAR apparatus. Optionally, the window smear detection apparatus may alternatively be independent of the LiDAR. For example, a function of the window smear detection apparatus is implemented by an MDC. For example, the obtaining unit 1401, the first processing unit 1402, and the second processing unit 1403 may be implemented by a processor of the LiDAR apparatus, and the output unit 1404 may be implemented as a communications interface of the LiDAR apparatus. Specifically, for example, when the LiDAR apparatus obtains the first window echo strength offline, the processor of the LiDAR apparatus may obtain the preset first window echo strength; or when the LiDAR apparatus obtains the first window echo strength online, the processor of the LiDAR apparatus may obtain the first window echo strength from the LiDAR apparatus (for example, the laser detector 202 in FIG. 2).

In another embodiment, the window smear detection apparatus 1400 may be implemented as a combination of the LiDAR apparatus and a processor of the MDC. For example, the first processing unit 1402 may be implemented by the processor of the LiDAR apparatus, and the second processing unit 1403 may be implemented by the processor of the MDC. The obtaining unit 1401 may also be implemented by the processor of the LiDAR apparatus. Specifically, for example, the foregoing step for smear categorization may be performed by the processor of the MDC, and the foregoing step for smear detection and the foregoing step for smear alarming may be performed by the processor of the LiDAR. The output unit 1404 may be a communications interface 1501 in FIG. 15, as specifically shown in FIG. 15.

FIG. 15 is a schematic block diagram of a window smear detection apparatus according to an embodiment of this application. The window smear detection apparatus shown in FIG. 15 may include a communications interface 1501, a processor 1502, and a memory 1503. The memory 1503 is configured to store instructions, the processor 1502 is configured to execute the instructions stored in the memory 1503, and the communications interface 1501 is configured to send information. Optionally, the memory 1503 may be coupled to the first processor 1502 through an interface, or may be integrated with the first processor 1502.

During implementation, the steps in the foregoing method may be implemented by using a hardware integrated logic circuit in the first processor 1502 or instructions in a form of software. The method disclosed with reference to embodiments of this application may be directly presented as being performed and completed by a hardware processor, or performed and completed by a combination of hardware and software modules in a processor. The software module may be located in a mature storage medium in the art, for example, a random access memory, a flash memory, a read-only memory, a programmable read-only memory, an electrically erasable programmable memory, or a register. The storage medium is located in the memory 1504, and the first processor 1502 reads information in the memory 1504 and completes the steps in the foregoing method in combination with hardware of the processor. To avoid repetition, details are not described herein again.

It should be understood that, in this embodiment of this application, the memory may include a read-only memory and a random access memory and provide instructions and data for the processor. A part of the processor may further include a non-volatile random access memory. For example, the processor may further store information about a device type.

The window smear detection apparatus may be a vehicle having a window smear detection function, or another device having a window smear detection function. The window smear detection apparatus includes, but is not limited to, another sensor, for example, a vehicle-mounted terminal, a vehicle controller, a vehicle-mounted module, a vehicle-mounted module set, a vehicle-mounted component, a vehicle-mounted chip, a vehicle-mounted unit, a vehicle-mounted radar, or a vehicle-mounted camera. A vehicle may implement the method provided in this application by using the vehicle-mounted terminal, the vehicle-mounted controller, the vehicle-mounted module, the vehicle-mounted module set, the vehicle-mounted component, the vehicle-mounted chip, the vehicle-mounted unit, the vehicle-mounted radar, or the camera.

The window smear detection apparatus may alternatively be another intelligent terminal having a window smear detection function other than a vehicle, or may be disposed in another intelligent terminal having a window smear detection function other than a vehicle, or may be disposed in a component of the intelligent terminal. The intelligent terminal may be another terminal device, for example, an intelligent transportation device, a smart household device, or a robot. The window smear detection apparatus includes, but is not limited to, an intelligent terminal or another sensor, for example, a controller, a chip, a radar, or a camera in the intelligent terminal, and another component.

The window smear detection apparatus may be a general-purpose device or a dedicated device. In a specific implementation, the apparatus may further be a desktop computer, a portable computer, a network server, a personal digital assistant (personal digital assistant, PDA), a mobile phone, a tablet computer, a wireless terminal device, an embedded device, or another device having a processing function. A type of the window smear detection apparatus is not limited in this embodiment of this application.

The window smear detection apparatus may alternatively be a chip or processor having a processing function. The window smear detection apparatus may include a plurality of processors. Each of the processors may be a single-core processor (single-CPU), or may be a multi-core processor (multi-CPU). The chip or processor with the processing function may be disposed in a sensor, or may not be disposed in a sensor but disposed at a receive end for an output signal of the sensor.

An embodiment of this application further provides a system applied to self-driving or intelligent driving. The system includes at least one window smear detection apparatus mentioned in the foregoing embodiments of this application and at least one of a camera, light detection and ranging, and another sensor. At least one apparatus in the system may be integrated into an overall unit or device, or at least one apparatus in the system may be disposed as an independent element or apparatus.

Further, any of the foregoing systems may interact with an MDC of a vehicle to provide detected and/or fused information for decision-making or control in vehicle driving.

An embodiment of this application further provides a terminal. The terminal includes at least one window smear detection apparatus mentioned in the foregoing embodiments of this application or any one of the foregoing systems. Further, the terminal may be a device on which light detection and ranging may be mounted, for example, a vehicle, an unscrewed aerial vehicle, a mapping apparatus, or a robot.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the processes in the foregoing embodiments of this application do not mean a sequence for performing. The sequence for performing the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It can be clearly understood by a person skilled in the art that, for convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling, direct coupling, or communications connection may be implemented through some interfaces. The indirect coupling or the communications connection between the apparatuses or units may be implemented in electronic, mechanical, or another form.

The units described as separate parts may or may not be physically separate, and parts displayed as units may or may not be physical units, and may have one location, or may be distributed over a plurality of network units. All or some of the units may be selected based on an actual requirement, to achieve the objectives of the solutions of embodiments.

In addition, the functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (that may be a personal computer, a server, or a network device) to perform all or some of the steps of the method described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A window smear detection method, comprising:

   obtaining a first window echo strength and a second window echo strength, wherein the first window echo strength represents a reference window echo strength, and the second window echo strength represents a window echo strength at a current moment;
   obtaining a detection parameter at a first moment and a detection parameter at a second moment that are of a target point, wherein the detection parameter comprises a reflectivity and/or a position coordinate of the target point; and
   obtaining a window smear parameter based on the first window echo strength, the second window echo strength, the detection parameter at the first moment, and the detection parameter at the second moment, wherein the window smear parameter is used to indicate a window smear status.

2. The method according to claim 1, wherein the obtaining a window smear parameter comprises:

   obtaining the window smear parameter based on a first change parameter and a second change parameter, wherein
   the first change parameter comprises a difference between the second window echo strength and the first window echo strength, or a ratio of the second window echo strength to the first window echo strength; and the second change parameter indicates a change between a reflectivity at the first moment and a reflectivity at the second moment that are of the target point, or a change between an actual value of a position coordinate of the target point at the first moment and an estimated value of the position coordinate at the first moment; and the estimated value of the position coordinate at the first moment is obtained based on a position coordinate at the second moment.

3. The method according to claim 1 or 2, wherein the method further comprises:
   outputting at least one of alarm information, the first change parameter, or the window smear parameter, wherein the alarm information is used to prompt the window smear status, and the first change parameter corresponds to smear categorization and/or smear area division.

4. The method according to claim 2 or 3, wherein

   a fifth change parameter comprises a first element and a second element, wherein the first element corresponds to $p$ elements in the first change parameter that are greater than a first threshold, and $p$ is a positive integer; and the second element corresponds to $q$ elements in the first change parameter that are less than or equal to the first threshold, a value of the second element is 0, and $q$ is a positive integer; and
   the obtaining a window smear parameter comprises:
   determining the window smear parameter based on a weighted sum of a value of at least one fourth change parameter, wherein the fourth change parameter comprises the second element, a third element, and a fourth element; and
   verifying the first element based on the second change parameter to obtain the third element and the fourth element, wherein

the third element represents $n$ times values of $r$ elements in the first element, the $r$ elements represent an element that is in the second change parameter corresponding to the $r$ elements and that is less than or equal to a second threshold, or the $r$ elements represent an element that is in the second change parameter corresponding to the $r$ elements and that is less than or equal to a third threshold, $r$ is a positive integer, and $n$ is a positive real number less than 1 or is 0; and

the fourth element represents $S$ elements in the first element, the $S$ elements represent an element that is in the second change parameter corresponding to the $S$ elements and that is greater than the second threshold, or the $S$ elements represent an element that is in the second change parameter corresponding to the $S$ elements and that is greater than the third threshold, and $S$ is a positive integer.

5. The method according to any one of claims 1 to 4, further comprising:
determining, based on the window smear parameter and a weight of a smear in each of different window areas, whether to output the alarm information.

6. The method according to claim 5, wherein the weight of the smear in each of the different window areas comprises:
determining the weight of the smear in each of the different window areas based on a position of each of the different window areas relative to a moving direction of a mobile device.

7. The method according to claim 5 or 6, wherein the method further comprises: determining an alarm coefficient; and
the determining whether to output the alarm information comprises:

outputting the alarm information if the window smear alarm coefficient is greater than a smear alarm threshold; or
skipping outputting the alarm information if the window smear alarm coefficient is less than or equal to the smear alarm threshold, wherein the smear alarm threshold is determined based on an application scenario.

8. The method according to claim 4, further comprising:
determining a type of a smear on a light detection and ranging front-facing window based on a first change parameter distribution vector and a window smear template, or determining the type of the smear on the light detection and ranging front-facing window based on a fourth change parameter distribution vector and the window smear template, wherein the type of the smear on the light detection and ranging front-facing window comprises a category of the smear and a degree of smearing of the smear.

9. The method according to claim 8, wherein the window smear template is determined based on the third change parameter, a window transmissivity, and a flow speed of a smear of each of different degrees of smearing in each of different categories of smears, wherein the window transmissivity represents the degree of smearing of the type of the window smear.

10. The method according to claim 8 or 9, wherein the determining a type of a smear on a light detection and ranging window comprises:

determining the type of the window smear based on a matching score $score_{I}$, wherein the matching score $score_{I}$ is determined based on the first change parameter distribution vector and the window smear template or determined based on the fourth change parameter distribution vector and the window smear template; or
determining the type of the window smear based on the matching score $score_{I}$ and a matching score $score_{II}$, wherein the matching score $score_{II}$ is determined based on a flow speed of the smear obtained based on the first change parameter and a flow speed of the smear in the window smear template or determined based on a flow speed of the smear obtained based on the fourth change parameter and a flow speed of the smear in the window smear template.

11. A window smear detection apparatus, comprising:

an obtaining unit, configured to obtain a first window echo strength and a second window echo strength, wherein the first window echo strength represents a reference window echo strength, and the second window echo strength represents a window echo strength at a current moment, wherein
the obtaining unit is configured to obtain a detection parameter at a first moment and a detection parameter at a second moment that are of a target point, wherein the detection parameter comprises a reflectivity and/or a position coordinate of the target point; and

a first processing unit, configured to obtain a window smear parameter based on the first window echo strength, the second window echo strength, the parameter at the first moment, and the parameter at the second moment, wherein the window smear parameter is used to indicate a window smear status.

**12.** The apparatus according to claim 11, wherein
the first processing unit is further configured to:

obtain the window smear parameter based on a first change parameter and a second change parameter, wherein the first change parameter comprises a difference between the second window echo strength and the first window echo strength, or a ratio of the second window echo strength to the first window echo strength; and the second change parameter indicates a change between a reflectivity at the first moment and a reflectivity at the second moment that are of the target point, or a change between an actual value of a position coordinate of the target point at the first moment and an estimated value of the position coordinate at the first moment; and the estimated value of the position coordinate at the first moment is obtained based on a position coordinate at the second moment.

**13.** The apparatus according to claim 11 or 12, further comprising an output unit, wherein the output unit is configured to output at least one of alarm information, the first change parameter, or the window smear parameter, wherein the alarm information is used to prompt the window smear status, and the first change parameter corresponds to smear categorization and/or smear area division.

**14.** The apparatus according to claim 12 or 13, wherein

a fifth change parameter comprises a first element and a second element, wherein the first element corresponds to $p$ elements in the first change parameter that are greater than a first threshold, and $p$ is a positive integer; and the second element corresponds to $q$ elements in the first change parameter that are less than or equal to the first threshold, a value of the second element is 0, and $q$ is a positive integer; and
the obtaining unit is specifically configured to:

determine the window smear parameter based on a weighted sum of a value of at least one fourth change parameter, wherein the fourth change parameter comprises the second element, a third element, and a fourth element; and
verify the first element based on the second change parameter to obtain the third element and the fourth element, wherein
the third element represents $n$ times values of $r$ elements in the first element, the $r$ elements represent an element that is in the second change parameter corresponding to the $r$ elements and that is less than or equal to a second threshold, or the $r$ elements represent an element that is in the second change parameter corresponding to the $r$ elements and that is less than or equal to a third threshold, $r$ is a positive integer, and $n$ is a positive real number less than 1 or is 0; and
the fourth element represents $S$ elements in the first element, the $S$ elements represent an element that is in the second change parameter corresponding to the $S$ elements and that is greater than the second threshold, or the $S$ elements represent an element that is in the second change parameter corresponding to the $S$ elements and that is greater than the third threshold, and $S$ is a positive integer.

**15.** The apparatus according to any one of claims 11 to 14, wherein the first processing unit is further configured to:
determine, based on the window smear parameter and a weight of a smear in each of different window areas, whether to output the alarm information.

**16.** The apparatus according to claim 15, wherein
the first processing unit is specifically configured to determine the weight of the smear in each of the different window areas based on a position of each of the different window areas relative to a moving direction of a mobile device.

**17.** The apparatus according to claim 15 or 16, wherein the first processing unit is further configured to determine an alarm coefficient; and

the first processing unit determines to output the alarm information if the window smear alarm coefficient is greater than a smear alarm threshold; or
the first processing unit determines to skip outputting the alarm information if the window smear alarm coefficient is less than or equal to the smear alarm threshold, wherein the smear alarm threshold is determined based on an application scenario.

18. The apparatus according to claim 14, wherein the apparatus further comprises a second processing unit, and the second processing unit is configured to:
determine a type of a smear on a light detection and ranging front-facing window based on a first change parameter distribution vector and a window smear template, or determine the type of the smear on the light detection and ranging front-facing window based on a fourth change parameter distribution vector and the window smear template, wherein the type of the smear on the light detection and ranging front-facing window comprises a category of the smear and a degree of smearing of the smear.

19. The apparatus according to claim 18, wherein the window smear template is determined based on the third change parameter, a window transmissivity, and a flow speed of a smear of each of different degrees of smearing in each of different categories of smears, wherein the window transmissivity represents the degree of smearing of the type of the window smear.

20. The apparatus according to claim 18 or 19, wherein the second processing unit is further configured to:

determine the type of the window smear based on a matching score $score_I$, wherein the matching score $score_I$ is determined based on the first change parameter distribution vector and the window smear template or determined based on the fourth change parameter distribution vector and the window smear template; or
determine the type of the window smear based on the matching score $score_I$ and a matching score $score_{II}$, wherein the matching score $score_{II}$ is determined based on a flow speed of the smear obtained based on the first change parameter and a flow speed of the smear in the window smear template or determined based on a flow speed of the smear obtained based on the fourth change parameter and a flow speed of the smear in the window smear template.

21. A computer-readable medium, comprising computer instructions, wherein when the computer instructions are run on an apparatus, the apparatus is enabled to perform the method according to any one of claims 1 to 10.

22. A chip, comprising:
at least one processor and an interface circuit, wherein the at least one processor invokes a computer program by using the interface circuit, so that an apparatus with the chip performs the method according to any one of claims 1 to 10.

23. A terminal, wherein the terminal comprises the window smear detection apparatus according to any one of claims 11 to 20, comprises the computer storage medium according to claim 21, or comprises the chip according to claim 22.

24. The terminal according to claim 23, wherein the terminal is a vehicle, an unscrewed aerial vehicle, or a robot.

FIG. 1

FIG. 2

FIG. 3

FIG. 4

Obtain point cloud data of light detection and ranging, where the point cloud data includes an intensity of reflected light — S501

Identify the point cloud data to determine an obstruction — S502

Determine an obstruction within a span range of a light detection and ranging window as a possible smear — S503

If at least one intensity of reflected light of the possible smear is greater than a first preset light intensity, determine that there is an obstruction on the light detection and ranging window — S504

Determine the smear as a transparent smear or an opaque smear based on the first preset light intensity and a second preset light intensity — S505

Determine a position and a size of the smear based on a data point of the smear, and generate a cleaning instruction to clean the window — S506

FIG. 5

S601 ⟋ Obtain a first window echo strength and a second window echo strength

S602 ⟋ Obtain a detection parameter at a first moment and a detection parameter at a second moment that are of a target point

S603 ⟋ Obtain a window smear parameter based on the first window echo strength, the second window echo strength, the detection parameter at the first moment, and the detection parameter at the second moment

FIG. 6

Horizontal scanning angle
−50°                          +50°

| +15° | 0 | 0 | 1 | 0 | 0 |
|------|---|---|---|---|---|
|      | 0 | 0 | 2 | 2 | 0 |
|      | 0 | 1 | 0 | 2 | 0 |
|      | 1 | 1 | 1 | 2 | 0 |
| −15° | 0 | 1 | 0 | 0 | 0 |

Vertical scanning angle

False alarm

(a)

Horizontal scanning angle
−50°                          +50°

| +15° | 0 | 0 | 1 | 0 | 0 |
|------|---|-----|---|---|---|
|      | 0 | 0 | 2 | 2 | 0 |
|      | 0 | **0.5** | 0 | 2 | 0 |
|      | **0** | **0.5** | 1 | 2 | 0 |
| −15° | 0 | **0** | 0 | 0 | 0 |

Vertical scanning angle

(b)

FIG. 7

801

$X_M = (x_M, y_M, z_M)$

$X_N = (x_N, y_N, z_N)$

M$^{th}$ frame of a LiDAR coordinate system

N$^{th}$ frame of the LiDAR coordinate system

FIG. 8

S901 — Obtain a smear alarm coefficient

S902 — Whether the smear alarm coefficient is greater than an alarm threshold

No — Skip giving an alarm — S904

Yes

S903 — Give an alarm

FIG. 9

EP 4 286 892 A1

|         | Horizontal scanning angle |      |      |      |      |
|---------|------|------|------|------|------|
| +15°    | 0.2  | 0.2  | 0.4  | 0.6  | 0.6  |
|         | 0.2  | 0.4  | 0.6  | 0.8  | 0.8  |
|         | 0.2  | 0.4  | 0.6  | 0.8  | 1    |
|         | 0.2  | 0.4  | 0.6  | 0.8  | 0.8  |
| −15°    | 0.2  | 0.2  | 0.4  | 0.6  | 0.6  |

−50° ←→ +50° (Vertical scanning angle)

Light detection and ranging is on
a left side of a vehicle

(a)

|         | Horizontal scanning angle |      |      |      |      |
|---------|------|------|------|------|------|
| +15°    | 0.25 | 0.5  | 0.5  | 0.5  | 0.25 |
|         | 0.5  | 0.75 | 0.75 | 0.75 | 0.5  |
|         | 0.5  | 0.75 | 1    | 0.75 | 0.5  |
|         | 0.5  | 0.75 | 0.75 | 0.75 | 0.5  |
| −15°    | 0.25 | 0.5  | 0.5  | 0.5  | 0.25 |

−50° ←→ +50° (Vertical scanning angle)

Light detection and ranging is in
a centroid of the vehicle

(b)

|         | Horizontal scanning angle |      |      |      |      |
|---------|------|------|------|------|------|
| +15°    | 0.6  | 0.6  | 0.4  | 0.2  | 0.2  |
|         | 0.8  | 0.8  | 0.6  | 0.4  | 0.2  |
|         | 1    | 0.8  | 0.6  | 0.4  | 0.2  |
|         | 0.8  | 0.8  | 0.6  | 0.4  | 0.2  |
| −15°    | 0.6  | 0.6  | 0.4  | 0.2  | 0.2  |

−50° ←→ +50° (Vertical scanning angle)

Light detection and ranging is on
a right side of the vehicle

(c)

FIG. 10

```
┌─────────────────────────────────────────────────────────────┐
│ Acquire a first window echo strength and a first target echo strength │ ⌇ S1101
└─────────────────────────────────────────────────────────────┘
                              │
                              ▼
┌─────────────────────────────────────────────────────────────┐
│ Acquire third window echo strengths and second target echo strengths in cases │ ⌇ S1102
│ of different categories of smears and different degrees of smearing │
└─────────────────────────────────────────────────────────────┘
                              │
                              ▼
┌─────────────────────────────────────────────────────────────┐
│ Prepare a histogram of third change parameters in cases of different categories │ ⌇ S1103
│ and different degrees of smearing, and obtain a transmissivity and a flow │
│ speed of a smear │
└─────────────────────────────────────────────────────────────┘
                              │
                              ▼
┌─────────────────────────────────────────────────────────────┐
│ Select a third change parameter distribution vector obtained in $l$ times of │ ⌇ S1104
│ experiments with a same category of a same degree of smearing, to obtain a │
│ window smear template for the same category of the same degree of smearing │
└─────────────────────────────────────────────────────────────┘
                              │
                              ▼
┌─────────────────────────────────────────────────────────────┐
│ Obtain a transmissivity and a flow speed of a smear in the template based on │ ⌇ S1105
│ window smear templates for the different categories of smears of the different │
│ degrees of smearing │
└─────────────────────────────────────────────────────────────┘
```

FIG. 11

(a)                          (b)                          (c)

FIG. 12

Obtain a first change parameter distribution vector or a fourth change parameter distribution vector ⌐ S1301

S1302 ⌐ Obtain a matching score $score_I$ of the first change parameter distribution vector and a window smear template, or obtain a matching score $score_I$ of the fourth change parameter distribution vector and the window smear template

Obtain a matching score $score_{II}$ of a flow speed of a smear obtained based on a first change parameter and a flow speed of the smear in the window smear template, or obtain a matching score $score_{II}$ of a flow speed of a smear obtained based on a fourth change parameter and the flow speed of the smear in the window smear template ⌐ S1303

Determine, based on the matching score $score_I$, a category and a degree of smearing that are of the smear in a smeared area of a window, or determine, based on the matching score $score_I$ and the matching score $score_{II}$, the category and the degree of smearing of the smear in the smeared area of the window ⌐ S1304

FIG. 13

FIG. 14

FIG. 15

## INTERNATIONAL SEARCH REPORT

International application No.

**PCT/CN2021/131860**

### A. CLASSIFICATION OF SUBJECT MATTER

G01S 17/04(2020.01)i;  G01S 7/38(2006.01)i

According to International Patent Classification (IPC) or to both national classification and IPC

### B. FIELDS SEARCHED

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNKI, CNTXT, DWPI, WPABSC: 雷达, 测距, 污染, 污, 脏, 遮挡, 遮蔽, 灰尘, 垢, 渍, 异物, 沉积物, 吸附物, 窗, 盖, 罩, 壳, 表面, 镜头, 传感器, 强度, 波强, 光强, 幅值, 电平, 能量, 回波, radar, lidar, window?, cover?, face, front, surface, glass, sensor, mud, dirt, dirty, contamination, contaminant, occlusion, blockage, pollution, coverage, shield+, foreign matter?, foreign substance?, intensity, strength, energy, level

### C. DOCUMENTS CONSIDERED TO BE RELEVANT

| Category* | Citation of document, with indication, where appropriate, of the relevant passages | Relevant to claim No. |
|---|---|---|
| Y | CN 110109062 A (HITACHI BUILDING TECHNOLOGY (GUANGZHOU) CO., LTD.) 09 August 2019 (2019-08-09) description, paragraphs [0035]-[0070] | 1-3, 5-7, 11-13, 15-17, 21-24 |
| Y | CN 109955829 A (BAYERISCHE MOTOREN WERKE AG) 02 July 2019 (2019-07-02) description paragraphs [0034]-[0040], [0056] | 1-3, 5-7, 11-13, 15-17, 21-24 |
| A | CN 112099045 A (HESAI PHOTONICS TECHNOLOGY CO., LTD.) 18 December 2020 (2020-12-18) entire document | 1-24 |
| A | CN 112099044 A (HESAI PHOTONICS TECHNOLOGY CO., LTD.) 18 December 2020 (2020-12-18) entire document | 1-24 |
| A | JP 2009250640 A (TOYOTA MOTOR CORP.) 29 October 2009 (2009-10-29) entire document | 1-24 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 February 2022** | **23 February 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/131860**

**C. DOCUMENTS CONSIDERED TO BE RELEVANT**

| Category* | Citation of document, with indication, where appropriate, of the relevant passages | Relevant to claim No. |
|---|---|---|
| A | JP 2001318146 A (OMRON TATEISI ELECTRONICS CO.) 16 November 2001 (2001-11-16) <br> entire document | 1-24 |
| A | CN 111551946 A (KYLE OPTICS TECHNOLOGY CO., LTD.) 18 August 2020 (2020-08-18) <br> entire document | 1-24 |
| A | CN 110481510 A (HYUNDAI MOBIS CO., LTD.) 22 November 2019 (2019-11-22) <br> entire document | 1-24 |

Form PCT/ISA/210 (second sheet) (January 2015)

<div style="text-align:center">

**INTERNATIONAL SEARCH REPORT**
**Information on patent family members**

</div>

| International application No. |
|---|
| **PCT/CN2021/131860** |

| Patent document cited in search report | | | Publication date (day/month/year) | Patent family member(s) | | | Publication date (day/month/year) |
|---|---|---|---|---|---|---|---|
| CN | 110109062 | A | 09 August 2019 | CN | 110109062 | B | 07 May 2021 |
| CN | 109955829 | A | 02 July 2019 | None | | | |
| CN | 112099045 | A | 18 December 2020 | None | | | |
| CN | 112099044 | A | 18 December 2020 | None | | | |
| JP | 2009250640 | A | 29 October 2009 | None | | | |
| JP | 2001318146 | A | 16 November 2001 | None | | | |
| CN | 111551946 | A | 18 August 2020 | CN | 111551946 | B | 25 December 2020 |
| CN | 110481510 | A | 22 November 2019 | US | 2019351464 | A1 | 21 November 2019 |
| | | | | KR | 20190130923 | A | 25 November 2019 |

Form PCT/ISA/210 (patent family annex) (January 2015)

**REFERENCES CITED IN THE DESCRIPTION**

**Patent documents cited in the description**

- CN 202110217667